# EUROPÄISCHE PATENTANMELDUNG

(11) **EP 2 995 564 A1**
(43) Veröffentlichungstag der Anmeldung: **16.03.2016**
(21) Anmeldenummer: 15185098.9
(22) Anmeldetag: 14.09.2015
(51) Int. Cl.: B65B 25/14, B65B 35/36, B65B 35/52, B65G 47/90, B25J 15/00

(54) **GREIFVORRICHTUNG ZUR HANDHABUNG EINER ANZAHL VON PAPIERROLLEN IN EINER PAPIERROLLENVERPACKUNGSVORRICHTUNG UND PAPIERROLLENVERPACKUNGSVORRICHTUNG**

(30) Priorität: 12.09.2014 DE 102014113199
(71) Anmelder: Wepa Hygieneprodukte GmbH, 59757 Arnsberg (DE)
(72) Erfinder: RAUMANN, Udo, 58802 Balve (DE); HELMES, Rüdiger, 59759 Arnsberg (DE)
(74) Vertreter: Manske, Jörg

(57) **Zusammenfassung**

Die Erfindung betrifft eine Greifvorrichtung (1) zur Handhabung einer Anzahl von Papierrollen (2) mit einem hohlzylindrischen Kern (20) in einer Papierrollenverpackungsvorrichtung (100), umfassend eine Anzahl pneumatisch betätigbarer Greifmittel (3a-3f), die so gestaltet sind, dass sie die Papierrollen (2) greifen können, wobei die Greifmittel (3a-3f) so ausgebildet sind, dass sie jeweils in den hohlzylindrischen Kern (20) einer der Papierrollen (2) eingreifen können und darin pneumatisch expandiert werden können, um die betreffende Papierrolle (2) zu greifen. Darüber hinaus betrifft die Erfindung eine Papierrollenverpackungsvorrichtung (100) mit einer Greifvorrichtung (1).

## Beschreibung

Die vorliegende Erfindung betrifft eine Greifvorrichtung zur Handhabung einer Anzahl von Papierrollen mit einem hohlzylindrischen Kern in einer Papierrollenverpackungsvorrichtung, umfassend eine Anzahl pneumatisch betätigbarer Greifmittel, die so gestaltet sind, dass sie die Papierrollen greifen können. Darüber hinaus betrifft die vorliegende Erfindung eine Papierrollenverpackungsvorrichtung zum Verpacken von Papierrollen mit einem hohlzylindrischen Kern in eine Folie oder in einen Verpackungskarton, umfassend eine Papierrollenzuführeinrichtung, auf der die Papierrollen gefördert werden können, zumindest eine Greifvorrichtung zur Handhabung einer Anzahl von Papierrollen, sowie eine Hub- und Translationsvorrichtung, an der die Greifvorrichtung angebracht ist und die dazu eingerichtet ist, die Greifvorrichtung zusammen mit den von dieser gegriffenen Papierrollen von der Papierrollenzuführeinrichtung anzuheben und derart zu bewegen, dass die Papierrollen in einen Verpackungskarton gelegt werden können oder mit einer Folie umwickelt werden können.

Im Stand der Technik werden zur Verpackung von Papierrollen, wie zum Beispiel Toilettenpapierrollen, insbesondere Toilettenpapier-Großrollen, oder Industrieputzpapierrollen, welche mittels einer Wickelvorrichtung hergestellt werden und einen hohlzylindrischen Kern aufweisen, Papierrollenverpackungsvorrichtungen verwendet, die so ausgebildet sind, dass die Papierrollen in Folien oder in Verpackungskartons verpackt werden können. Diese Papierrollenverpackungsvorrichtungen weisen zumindest eine Greifvorrichtung auf, die so ausgebildet ist, dass ein oder mehrere Papierrollen mittels einer Anzahl pneumatisch betätigbarer, fingerartig geformter Greifmittel gleichzeitig von außen gegriffen werden können, um diese von einer Papierrollenzuführeinrichtung anzuheben und in einen dafür vorgesehenen Verpackungskarton überführen zu können oder mit einer Folie umwickeln zu können. Diese Greifvorrichtung ist so ausgebildet, dass einzelne Papierrollen sowie verschiedene Papierrollenformationen mit einer Mehrzahl in ein oder mehreren Reihen nebeneinander angeordneter Papierrollen - jeweils bis zu drei Lagen hoch - gegriffen und verpackt beziehungsweise mit der Folie umwickelt werden können. Zur Lagenbildung kommen hierbei ausschließlich die pneumatisch betätigbaren Greifvorrichtungen mit Greifmitteln zum Einsatz, welche jeweils produktspezifisch in Bezug auf die Rollenabmessung, die zu bildende Formation und Lagenzahl ausgeführt sind.

Die Papierrollen können zum Beispiel zweispurig auf der Papierrollenzuführeinrichtung der Papierrollenverpackungsvorrichtung gegen eine Sperrvorrichtung laufen, die zum Beispiel als Sperrschieber ausgebildet sein kann. Die Papierrollenzuführeinrichtung weist einlaufseitig von der Sperrvorrichtung beabstandet angeordnete, vorzugsweise schwenkbar ausgebildete Sperrelemente auf, die durch optoelektronische Überwachungsmittel betätigt und geschlossen werden können, wenn alle Rollenplätze vor der Sperrvorrichtung belegt sind. Das geöffnete Greifwerkzeug senkt sich nun von einer Hub- und Translationsvorrichtung betrieben über die so gebildete Papierrollenformation ab. Die Greifmittel werden pneumatisch betätigt und an den Außenseiten der Papierrollen zur Anlage gebracht, so dass die Greifmittel die Papierrollenformation von außen greifen können. Produktabhängig wird diese Papierrollenformation nun verdoppelt oder verdreifacht, indem die Greifvorrichtung die Papierrollenformation anhebt, darunter die nächste Lage mit Papierrollen gebildet wird und nach definierter Wegstrecke wieder öffnet, um die zweite beziehungsweise dritte Lage zu bilden. Alternativ wird nur eine Lage dieser Formation zur Karton- oder Folienverpackung geführt.

Diese aus dem Stand der Technik vorbekannte Greifvorrichtung weist generell, insbesondere jedoch bei der Handhabung mehrerer Lagen übereinander gestapelter Papierrollen, nicht unerhebliche Probleme auf. Die bereits aus geringen Varianzen des zur Herstellung der Papierrollen verwendeten Vormaterials resultierenden Durchmesser- und Wickelhärtenschwankungen führen dazu, dass sehr schnell einzelne Papierrollen beim Anheben, Absenken und/oder beim Transport zur Kartonverpackung verloren gehen. Dieses führt zu unerwünschten Störungen und Produktionsunterbrechungen, welche bei allen Varianten dieser vorbekannten Greifvorrichtung auftreten, da allen das gleiche Konstruktionsprinzip zu Grunde liegt. Diverse Versuche zur Optimierung der Greifvorrichtungen, wie zum Beispiel durch Beschichtung der Greifmittel, insbesondere mit Silikonüberzügen zur Erhöhung des Reibungskoeffizienten, sowie durch partielle Querschnittserhöhungen zur punktuellen Verbesserung der Greifkraft, brachten in der Summe keinen nennenswerten Erfolg. Ein weiterer Nachteil dieser vorbekannten Greifvorrichtung besteht darin, dass sich beabsichtigt weich gewickelte Papierrollen kaum ohne Druckmarken und/oder Deformierungen greifen lassen.

Die vorliegende Erfindung macht es sich zur Aufgabe, eine Greifvorrichtung sowie eine Papierrollenverpackungsvorrichtung der eingangs genannten Art zur Verfügung zu stellen, die ein sicheres, deformationsfreies Greifen der Papierrollen ermöglichen.

Die Lösung dieser Aufgabe liefern eine Greifvorrichtung der eingangs genannten Art mit den Merkmalen des kennzeichnenden Teils des Anspruchs 1 sowie eine Papierrollenverpackungsvorrichtung der eingangs genannten Art mit den Merkmalen des kennzeichnenden Teils des Anspruchs 13. Die Unteransprüche betreffen vorteilhafte Weiterbildungen der Erfindung.

Eine erfindungsgemäße Greifvorrichtung zeichnet sich dadurch aus, dass die Greifmittel so ausgebildet sind, dass sie jeweils in den hohlzylindrischen Kern einer der Papierrollen eingreifen können und darin pneumatisch expandiert werden können, um die betreffende Papierrolle zu greifen. Die grundlegende Idee der vorliegenden Erfindung besteht darin, die Greifvorrichtung so auszuführen, dass die Handhabung der Papierrollen anders als im Stand der Technik nicht von außen mittels der oben beschriebenen Greifvorrichtung, sondern von innen - auf den Innendurchmesser des hohlzylindrischen Kerns wirkend - erfolgt. Die expandierbaren Greifmittel, die in die hohlzylindrischen Kerne der Papierrollen eingreifen, wirken dabei als Spannelemente, die ein sicheres Ergreifen der Papierrollen durch Reibschluss ermöglichen. Dieses Ergreifen der Papierrollen von innen hat den Vorteil, dass die Wickelhärte der Papierrollen, Wickelhärteschwankungen sowie Durchmesserschwankungen der Papierrollen keinen Einfluss auf die Greifkraft oder auf die Greifqualität haben, da ausschließlich auf ein konstantes Maß, und zwar den Innendurchmesser des Kerns der Papierrollen, Bezug genommen wird. Der Verlust von Papierrollen während des Handhabungsprozesses, Rollenbeschädigungen oder Deformationen können mit Hilfe der erfindungsgemäßen Greifvorrichtung vollständig eliminiert, die Störungsquote gesenkt sowie die Verfügbarkeit und Leistung der mit der Greifvorrichtung ausgerüsteten Papierrollenverpackungsvorrichtung nachhaltig optimiert werden.

Vorzugsweise kann die Greifvorrichtung eine der Anzahl der Greifmittel entsprechende Anzahl von Greifmittelhalteeinrichtungen aufweisen, an denen jeweils eines der Greifmittel angebracht ist.

In einer besonders vorteilhaften Ausführungsform wird vorgeschlagen, dass die Greifmittel lösbar austauschbar an den ihnen zugeordneten Greifmittelhalteeinrichtungen angebracht sind. Durch diese Maßnahme wird ein einfacher, vorzugsweise werkzeugloser, Austausch der Greifmittel ermöglicht. In diesem Zusammenhang hat es sich als zweckmäßig erwiesen, dass die Greifmittel mit den Greifmittelhalteeinrichtungen verschraubt sind. Alternativ besteht auch die Möglichkeit, jedes der Greifmittel mittels einer Schnellverschlusseinrichtung an einer der Greifmittelhalteeinrichtungen zu befestigen. Die Greifmittel können somit produktspezifisch in Bezug auf die Abmessungen der Papierrollen, insbesondere hinsichtlich des Durchmessers des hohlzylindrischen Kerns, die zu bildende Papierrollenformation und Lagenzahl ausgeführt werden und bei Bedarf auf einfache Weise ausgetauscht werden.

In einer bevorzugten Ausführungsform kann vorgesehen sein, dass die Greifmittelhalteeinrichtungen rohrförmig ausgebildet sind.

In einer besonders bevorzugten Ausführungsform besteht die Möglichkeit, dass die Greifvorrichtung ein Trägerelement umfasst, das an einer Hub- und Translationsvorrichtung der Papierrollenverpackungsvorrichtung befestigbar ist. Vorzugsweise können die Greifmittelhalteeinrichtungen an dem Trägerelement angebracht sein, so dass die Greifvorrichtung eine vormontierte Einheit bildet. Das Trägerelement kann insbesondere plattenförmig ausgebildet sein.

In einer bevorzugten Ausführungsform wird vorgeschlagen, dass die Greifmittel als Einzel- oder Mehrpunktgreifmittel ausgebildet sind, so dass sie für alle zum Einsatz kommenden Innendurchmesser der Kerne der Papierrollen verwendet werden können.

In einer besonders bevorzugten Ausführungsform kann vorgesehen sein, dass die Greifmittel als Balggreifmittel mit mindestens einem expandierbaren Balg ausgebildet sind. Balggreifmittel zeichnen sich insbesondere durch eine schlanke Bauform aus, so dass sie sich für den hier vorgestellten Verwendungszweck besonders gut eignen. Ferner weisen Balggreifmittel typischerweise im entspannten Zustand Durchmesser von nur 8 bis 66 mm auf und in einem expandierten Zustand Wirk- beziehungsweise Spanndurchmesser von 11 bis 85 mm auf, welche die Verwendung bei jedem typischerweise zum Einsatz kommenden Innendurchmesser der hohlzylindrischen Kerne der Papierrollen erlauben. Durch einen wahlweisen Luftanschluss, seitlich oder von oben, lässt sich aus diesen Balggreifmitteln eine produktspezifische Greifvorrichtung herstellen, welche erhebliche Vorteile im Vergleich zur bisher angewendeten Greiftechnik bietet. Der einzige, in der Praxis jedoch hinnehmbare Nachteil besteht darin, dass sich die Varianz des Rollenaußendurchmessers auf geringerem Niveau als bei Verwendung eines Werkzeugs mit Greifzangen bewegen muss.

In einer bevorzugten Ausführungsform wird vorgeschlagen, dass die Greifvorrichtung eine Druckluftverteilungseinrichtung, die an eine Druckluftversorgungseinrichtung anschließbar ist, und eine Anzahl von Druckluftanschlussschläuchen umfasst, die an die Druckluftverteilungseinrichtung und an die Greifmittel angeschlossen sind. Vorzugsweise kann die Druckluftverteilungseinrichtung an der Trägerplatte angebracht sein.

Eine erfindungsgemäße Papierrollenverpackungsvorrichtung zeichnet sich dadurch aus, dass die Greifvorrichtung nach einem der Ansprüche 1 bis 12 ausgebildet ist. Dadurch können die Verfügbarkeit sowie die Leistung der mit der Greifvorrichtung ausgerüsteten Papierrollenverpackungsvorrichtung nachhaltig verbessert werden. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer Greifvorrichtung zur Handhabung einer Anzahl von Papierrollen mit einem hohlzylindrischen Kern, die gemäß einem bevorzugten Ausführungsbeispiel der vorliegenden Erfindung ausgeführt ist,
- Fig. 2: eine schematisch stark vereinfachte Draufsicht auf eine Papierrollenverpackungsvorrichtung, die das Greifen der Papierrollen mittels der in Fig. 1 dargestellten Greifvorrichtung veranschaulicht,
- Fig. 3: einen Längsschnitt durch eine Papierrolle, in deren hohlzylindrischen Kern ein Greifmittel der Greifvorrichtung eingreift, in einer Betriebsstellung des Greifmittels vor dem Ergreifen der Papierrolle,
- Fig. 4: einen weiteren Längsschnitt durch die Papierrolle gemäß Fig. 3, in deren hohlzylindrischen Kern das Greifmittel der Greifvorrichtung eingreift, nach dem Ergreifen der Papierrolle.

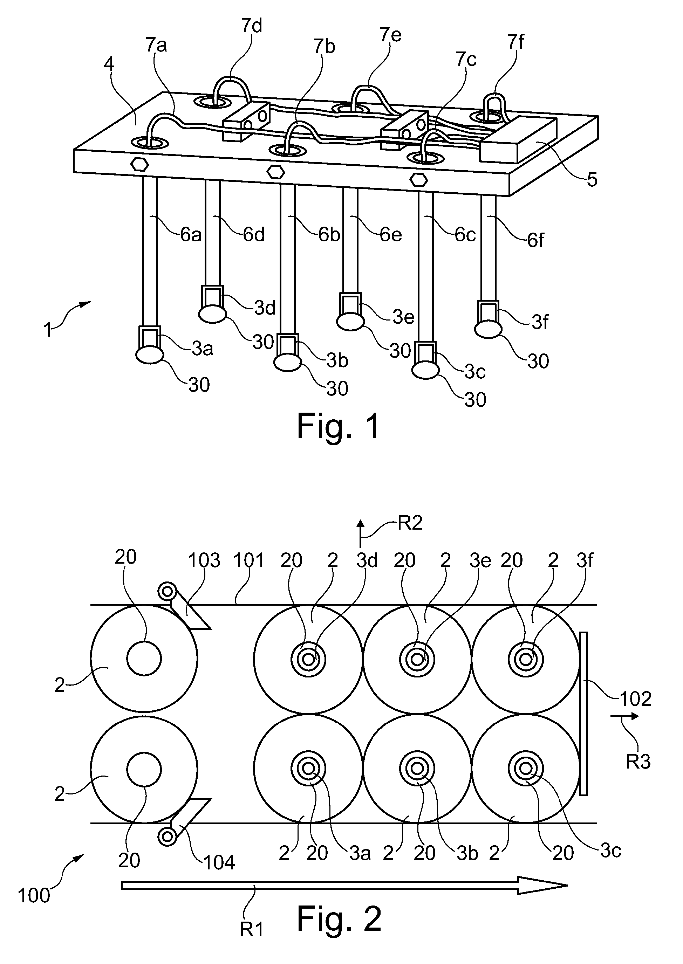

Unter Bezugnahme auf Fig. 1 umfasst eine Greifvorrichtung 1 zur Handhabung einer Anzahl von Papierrollen 2 mit einem hohlzylindrischen Kern 20, die gemäß einem bevorzugten Ausführungsbeispiel der vorliegenden Erfindung ausgeführt ist, eine Anzahl pneumatisch betätigbarer, expandierbarer Greifmittel 3a-3f. Vorliegend sind insgesamt sechs dieser pneumatisch betätigbaren Greifmittel 3a-3f vorgesehen, so dass gleichzeitig sechs Papierrollen 2 in einer 3x2-Papierrollenformation (d.h. zwei Reihen mit jeweils drei hintereinander angeordneten Papierrollen 2) gegriffen werden können.

Die Greifvorrichtung 1 umfasst ferner ein plattenförmig ausgebildetes Trägerelement 4, das an einer hier nicht explizit dargestellten Hub- und Translationsvorrichtung einer Papierrollenverpackungsvorrichtung 100 angebracht werden kann. Ferner umfasst die Greifvorrichtung 1 eine der Anzahl der Greifmittel 3a-3f entsprechende Anzahl von Greifmittelhalteeinrichtungen 6a-6f, die an dem Trägerelement 4 befestigt sind und sich orthogonal zu dem Trägerelement 4 erstrecken. An einem freien Ende jeder der Greifmittelhalteeinrichtungen 6a-6f ist jeweils eines der Greifmittel 3a-3f angebracht. Vorzugsweise sind die Greifmittel 3a-3f lösbar austauschbar an den Greifmittelhalteeinrichtungen 6a-6f angebracht. Vorteilhaft können zu diesem Zweck zum Beispiel Schnellverschlusseinrichtungen vorgesehen sein, die einen werkzeuglosen Austausch der Greifmittel 3a-3f ermöglichen. Besonders bevorzugt ist es, wenn die Greifmittel 3a-3f mit den Greifmittelhalteeinrichtungen 6a-6f verschraubt sind. Die Greifmittel 3a-3f können somit produktspezifisch in Bezug auf die Abmessungen der Papierrollen, insbesondere hinsichtlich des Durchmessers des hohlzylindrischen Kerns 20, die zu bildende Papierrollenformation und Lagenzahl ausgeführt und auf einfache Weise ausgetauscht werden. Die Greifmittelhalteeinrichtungen 6a-6f sind in diesem Ausführungsbeispiel rohrförmig ausgeführt, so dass durch jede der Greifmittelhalteeinrichtungen 6a-6f jeweils ein Druckluftanschlussschlauch 7a-7f oder eine Druckluftanschlussleitung hindurchgeführt werden kann und an eines der Greifmittel 3a-3f angeschlossen werden kann. Die Greifvorrichtung 1 umfasst ferner eine Druckluftverteilungseinrichtung 5, die an dem Trägerelement 4 an einer den Greifmitteln 3a-3f gegenüberliegenden Seite angebracht ist. Die Druckluftanschlussschläuche 7a-7f sind an die Druckluftverteilungseinrichtung 5 angeschlossen, die ihrerseits an eine externe Druckluftversorgungseinrichtung, insbesondere eine Druckluftleitung, anschließbar ist, so dass die Greifmittel 3a-3f während des Betriebs mit Druckluft versorgt werden können.

Die pneumatisch betätigbaren, expandierbaren Greifmittel 3a-3f sind vorzugsweise als Balggreifmittel ausgebildet. Derartige Balggreifmittel zeichnen sich insbesondere durch eine schlanke Bauform aus, so dass sie sich für den hier vorgesehenen Anwendungszweck besonders gut eignen. Um die Papierrollen 2 ergreifen zu können, greifen die als Balggreifmittel ausgebildeten Greifmittel 3a-3f in einem nicht expandierten Zustand, in der sie einen geringeren Außendurchmesser als in einem expandierten Zustand aufweisen, jeweils in den hohlzylindrischen Kern 20 einer der Papierrollen 2 ein und werden anschließend durch eine Beaufschlagung mit Druckluft expandiert, so dass sich ihr Außendurchmesser vergrößert und sie durch Reibschluss die betreffende Papierrolle 2 von innen am Kern 20 greifen können. Mit Hilfe der vorliegend sechs Greifmittel 3a-3f können somit sechs Papierrollen 2 beziehungsweise mehrere Gruppen von je sechs Papierrollen 2, die derart übereinander gestapelt sind, dass deren hohlzylindrische Kerne 20 paarweise miteinander fluchten, gleichzeitig gegriffen werden.

Unter Bezugnahme auf Fig. 2 soll nachfolgend eine Papierrollenverpackungsvorrichtung 100 näher erläutert werden, die mit der in Fig. 1 dargestellten Greifvorrichtung 1 ausgerüstet ist. Aus Vereinfachungsgründen wurden hierbei nur die Greifmittel 3a-3f der Greifvorrichtung 1, die in die hohlzylindrischen Kerne 20 der Papierrollen 2 eingreifen können, zeichnerisch dargestellt. Bei den Papierrollen 2 kann es sich zum Beispiel um Toilettenpapierrollen, insbesondere Toilettenpapier-Großrollen, oder Industrieputzpapierrollen handeln, welche mittels einer Wickelvorrichtung hergestellt werden und einen hohlzylindrischen Kern 20 aufweisen. Der hohlzylindrische Kern 20 kann jeweils durch eine innere Hülse der Papierrolle 2 gebildet sein. Alternativ können die Papierrollen 2 auch hülsenlos ausgebildet sein. Mittels der Papierrollenverpackungsvorrichtung 100 ist es möglich, die Papierrollen 2 in Folie oder in Verpackungskartons zu verpacken.

Die Papierrollenverpackungsvorrichtung 100 umfasst eine Papierrollenzuführeinrichtung 101, auf der die Papierrollen 2 in diesem Ausführungsbeispiel zweispurig in einer Förderrichtung R1 gefördert werden. Die Papierrollen 2 laufen gegen eine Sperrvorrichtung 102, die zum Beispiel als Sperrschieber ausgebildet sein kann. Die Papierrollenzuführeinrichtung 101 weist ferner zwei um eine vertikale Achse schwenkbare Sperrelemente 103, 104 auf, die vorzugsweise durch optoelektronische Überwachungsmittel betätigt und geschlossen werden können, wenn alle der vorliegend sechs Papierrollenplätze vor der Sperrvorrichtung 102 mit den Papierrollen 2 belegt sind. Mittels einer hier nicht explizit dargestellten Hub- und Translationsvorrichtung der Papierrollenverpackungsvorrichtung 100 werden die Greifmittel 3a-3f der Greifvorrichtung nun oberhalb der so gebildeten 3x2-Papierrollenformation positioniert und anschließend abgesenkt, so dass jedes der sechs Greifmittel 3a-3f in einem nicht expandierten Zustand in den hohlzylindrischen Kern 20 einer der Papierrollen 2 eingreift. Anschließend werden die Greifmittel 3a-3f pneumatisch betätigt und dabei expandiert, so dass sie reibschlüssig an einer Innenseite des hohlzylindrischen Kerns 20 der jeweiligen Papierrolle 2 anliegen und so die betreffende Papierrolle 2 durch Reibschluss greifen können. Auf diese Weise werden die Papierrollen 2 der 3x2-Papierrollenformation von den sechs Greifmitteln 3a-3f gegriffen. Mittels der Hub- und Translationsvorrichtung der Papierrollenverpackungsvorrichtung 100 können die Greifmittel 3a-3f mit den Papierrollen 2 angehoben und zum Beispiel in einer Richtung R2 senkrecht zu der Förderrichtung R1 bewegt werden und in einen Verpackungskarton gelegt werden, indem die Greifmittel 3a-3f nach dem Einbringen der Papierrollen 2 in den Verpackungskarton durch Entlüften in den nicht expandierten Zustand überführt werden, so dass sie sich von den Kernen 20 der Papierrollen 2 lösen können, und die Hub- und Translationsvorrichtung nachfolgend die Greifvorrichtung 1 anhebt. Wenn die Papierrollenverpackungsvorrichtung 100 für eine Verpackung der Papierrollen 2 in Folie eingerichtet ist, ist es zweckmäßig, die vorzugsweise als Sperrschieber ausgebildete Sperrvorrichtung 102 abzusenken und die von der Greifvorrichtung 1 gehaltene Papierrollenformation anzuheben und in einer Förderrichtung R3 zu bewegen, die der Förderrichtung R1 der Papierrollen 2 zu der Sperrvorrichtung 102 entspricht, und nachfolgend mit der Folie zu umwickeln.

Produktabhängig kann die 3x2-Papierrollenformation vor dem Einbringen in einen Verpackungskarton beziehungsweise vor dem Umwickeln mit einer Folie auch vervielfacht, insbesondere verdoppelt oder verdreifacht, werden. Zu diesem Zweck wird die Greifvorrichtung 1 mit den von den Greifmitteln 3a-3f gehaltenen Papierrollen 2 einer ersten 3x2-Papierrollenformation mittels der Hub- und Translationsvorrichtung so weit angehoben, dass mittels der Papierrollenzuführeinrichtung 101 wiederum sechs Papierrollen 2 zugeführt werden können, die gegen die geschlossene Sperrvorrichtung 102 laufen und unterhalb der ersten 3x2-Papierrollenformation eine zweite 3x2-Papierrollenformation bilden. In einem nächsten Schritt wird die Greifvorrichtung 1 mittels der Hub- und Translationsvorrichtung erneut abgesenkt, bis die Papierrollen 2 der ersten 3x2-Papierrollenformation auf den Papierrollen 2 der zweiten 3x2-Papierrollenformation aufliegen und die Kerne 20 der übereinander angeordneten Papierrollen 20 paarweise miteinander fluchten. Dabei werden nach einer definierten Wegstrecke die Greifmittel 3a-3f durch Entlüften wieder in einen entspannten Zustand überführt, so dass sie sich von den Kernen 20 der Papierrollen 2 der ersten (oberen) 3x2-Papierrollenformation lösen können. Anschließend wird die Greifvorrichtung 1 weiter abgesenkt, so dass jedes der Greifmittel 3a-3f in den Kern 20 einer der Papierrollen 2 der zweiten (unteren) 3x2-Papierrollenformation eingreift. In einem darauffolgenden Schritt werden die Greifmittel 3a-3f durch eine erneute Beaufschlagung mit Druckluft wieder expandiert, so dass die Papierrollen 2 der zweiten 3x2-Papierrollenformation von den Greifmitteln 3a-3f gehalten werden. Durch Aktivieren der Hub- und Translationsvorrichtung können die beiden übereinander angeordneten 3x2-Papierrollenformationen angehoben und bewegt werden und dadurch in einen Verpackungskarton überführt werden oder mit einer Folie umwickelt werden. In analoger Weise kann eine dritte 3x2-Papierrollenformation hinzugefügt werden.

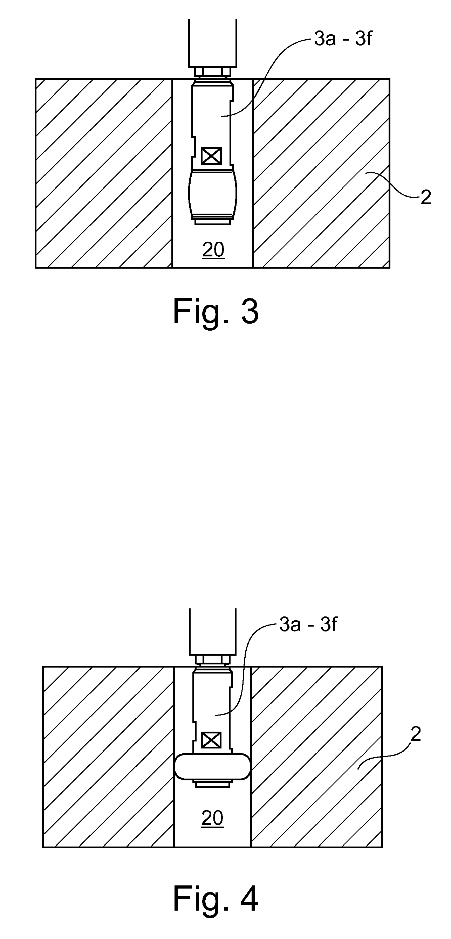

Unter Bezugnahme auf Fig. 3 und 4 soll nachfolgend das Funktionsprinzip eines der Greifmittel 3a-3f der Greifvorrichtung 1 näher erläutert werden. Jedes der Greifmittel 3a-3f weist einen inneren, axial bewegbaren Kolben und einen expandierbaren Balg 30 auf. Durch eine Beaufschlagung des inneren Kolbens mit Druckluft, die dem Greifmittel 3a-3f mittels des daran angeschlossenen Druckluftanschlussschlauchs 7a-7f zugeführt wird, bewegt sich dieser Kolben in axialer Richtung. Die Bewegung des inneren Kolbens wird dabei auf den Balg 30 übertragen. Dadurch wird erreicht, dass der Balg 30 expandiert und sich nach außen verformt. Durch die daraus resultierende Vergrößerung seines Außendurchmessers greift der Balg 30 innen an dem Kern 20 der Papierrolle 2 an und wird an diesem durch Reibschluss geklemmt. Diese Situation ist in Fig. 3 zu erkennen. Wenn das Greifmittel 3a-3f durch einen Wegfall der Druckluftbeaufschlagung wieder entlüftet wird, stellt sich das Greifmittel 3a-3f aufgrund der Wirkung einer Rückstellkraft des Balges 30 wieder in die Ausgangsposition gemäß Fig. 3 zurück und löst sich dadurch von dem Kern 20 und gibt auf diese Weise die Papierrolle 2 frei.

## Patentansprüche

1. Greifvorrichtung (1) zur Handhabung einer Anzahl von Papierrollen (2) mit einem hohlzylindrischen Kern (20) in einer Papierrollenverpackungsvorrichtung (100), umfassend eine Anzahl pneumatisch betätigbarer Greifmittel (3a-3f), die so gestaltet sind, dass sie die Papierrollen (2) greifen können, **dadurch gekennzeichnet, dass** die Greifmittel (3a-3f) so ausgebildet sind, dass sie jeweils in den hohlzylindrischen Kern (20) einer der Papierrollen (2) eingreifen können und darin pneumatisch expandiert werden können, um die betreffende Papierrolle (2) zu greifen.

2. Greifvorrichtung (1) nach Anspruch 1, **dadurch gekennzeichnet, dass** die Greifvorrichtung (1) eine der Anzahl der Greifmittel (3a-3f) entsprechende Anzahl von Greifmittelhalteeinrichtungen (6a-6f) aufweist, an denen jeweils eines der Greifmittel (3a-3f) angebracht ist.

3. Greifvorrichtung (1) nach Anspruch 2, **dadurch gekennzeichnet, dass** die Greifmittel (3a-3f) lösbar austauschbar an den ihnen zugeordneten Greifmittelhalteeinrichtungen (6a-6f) angebracht sind.

4. Greifvorrichtung (1) nach einem der Ansprüche 2 oder 3, **dadurch gekennzeichnet, dass** die Greifmittel (3a-3f) mit den Greifmittelhalteeinrichtungen (6a-6f) verschraubt sind.

5. Greifvorrichtung (1) nach einem der Ansprüche 2 oder 3, **dadurch gekennzeichnet, dass** jedes der Greifmittel (3a-3f) mittels einer Schnellverschlusseinrichtung an einer der Greifmittelhalteeinrichtungen (6a-6f) befestigt ist.

6. Greifvorrichtung (1) nach einem der Ansprüche 2 bis 5, **dadurch gekennzeichnet, dass** die Greifmittelhalteeinrichtungen (6a-6f) rohrförmig ausgebildet sind.

7. Greifvorrichtung (1) nach einem der Ansprüche 1 bis 6, **dadurch gekennzeichnet, dass** die Greifvorrichtung (1) ein Trägerelement (4) umfasst, das an einer Hub- und Translationsvorrichtung der Papierrollenverpackungsvorrichtung (100) befestigbar ist.

8. Greifvorrichtung (1) nach Anspruch 7, **dadurch gekennzeichnet, dass** die Greifmittelhalteeinrichtungen (6a-6f) an dem Trägerelement (4) angebracht sind.

9. Greifvorrichtung (1) nach einem der Ansprüche 7 oder 8, **dadurch gekennzeichnet, dass** das Trägerelement (4) plattenförmig ausgebildet ist.

10. Greifvorrichtung (1) nach einem der Ansprüche 1 bis 9, **dadurch gekennzeichnet, dass** die Greifmittel (3a-3f) als Einzel- oder Mehrpunktgreifmittel ausgebildet sind.

11. Greifvorrichtung (1) nach einem der Ansprüche 1 bis 10, **dadurch gekennzeichnet, dass** die Greifmittel (3a-3f) als Balggreifmittel mit zumindest einem expandierbaren Balg (30) ausgebildet sind.

12. Greifvorrichtung (1) nach einem der Ansprüche 1 bis 11, **dadurch gekennzeichnet, dass** die Greifvorrichtung (1) eine Druckluftverteilungseinrichtung (5), die an eine Druckluftversorgungseinrichtung anschließbar ist, und eine Anzahl von Druckluftanschlussschläuchen (7a-7f) umfasst, die an die Druckluftverteilungseinrichtung (5) und an die Greifmittel (3a-3f) angeschlossen sind.

13. Papierrollenverpackungsvorrichtung (100) zum Verpacken von Papierrollen (2) mit einem hohlzylindrischen Kern (20) in eine Folie oder in einen Verpackungskarton, umfassend
- eine Papierrollenzuführeinrichtung (101), auf der die Papierrollen (2) gefördert werden können,
- zumindest eine Greifvorrichtung (1) zur Handhabung einer Anzahl von Papierrollen (2), sowie
- eine Hub- und Translationsvorrichtung, an der die Greifvorrichtung (1) angebracht ist und die dazu eingerichtet ist, die Greifvorrichtung (1) zusammen mit den von dieser gegriffenen Papierrollen (2) von der Papierrollenzuführeinrichtung (101) anzuheben und derart zu bewegen, dass die Papierrollen (2) in einen Verpackungskarton gelegt werden können oder mit einer Folie umwickelt werden können,
**dadurch gekennzeichnet, dass** die Greifvorrichtung (1) nach einem der Ansprüche 1 bis 12 ausgebildet ist.
